# EUROPEAN PATENT SPECIFICATION

(11) **EP 3 097 811 B1**
(45) Date of publication and mention of the grant of the patent: **26.09.2018**
(21) Application number: 16159562.4
(22) Date of filing: 10.03.2016
(51) Int. Cl.: A43B 23/17, A43B 23/04, A43B 13/22, A43B 13/26, B29D 35/14

(54) **METHOD OF MANUFACTURING SOLES FOR SPORT SHOES**
SPORTSCHUHSOHLENHERSTELLUNGSVERFAHREN
PROCEDE DE FABRICATION DE SEMELLES POUR CHAUSSURES DE SPORT

(30) Priority: 10.03.2015 DE 102015204268
(43) Date of publication of application: 30.11.2016
(60) Divisional application: 18189433.8
(73) Proprietor: adidas AG, 91074 Herzogenaurach (DE)
(72) Inventor: WEIDL, Jürgen, 91074 Herzogenaurach (DE)
(74) Representative: Wegner, Hans

(56) References cited:
- EP-A1- 1 468 815
- WO-A1-2014/022588
- DE-A1- 3 440 567
- GB-A- 2 479 220
- US-A- 4 447 967

## Description

### 1. Technical Field

The present invention relates to a method for manufacturing a sports shoe sole.

### 2. Prior Art

Shoes, in particular sports shoes, generally comprise a sole and a shoe upper. The sole of the shoe serves to protect the foot from injuries, which may for example arise when stepping on sharp objects. Moreover, a sole may serve to increase the traction of the wearer of the shoe. The shoe upper serves for fixing the foot within the shoe and on the sole. Further, the shoe upper may provide stability to the foot, for example to prevent a twisting during fast movements. Moreover, the shoe upper may protect the foot from outside influences such as water, dirt, etc.

Different requirements are demanded from shoe uppers and soles of a shoe. Therefore, a sole is usually manufactured from a different material than a shoe upper, and the sole is subsequently attached to the shoe upper. Soles may, for example, be stitched, glued or nailed to shoe uppers. Also within a sole or a shoe upper often different requirements have to be met in different regions, such that also the sole or the shoe upper may be composed by different constituents.

Manufacturing methods for such multi-part shoes require that the individual constituents of a shoe are, for example, punched or cut in a multitude of separate fabrication steps. This does not only lead to a labor-intensive and complex manufacturing method, but also leads to a large amount of waste being produced in form of the arising scrap. Moreover, the individual constituents have to be connected to each other, e.g. stitched or glued, often even manually. This adds to the labor intensity and complexity. Finally, for example, when gluing, often solvents are used, which are harmful to the environment.

EP 2 815 668 A1 discloses a method for manufacturing a shoe, in which a sock-shaped base member is attached to a last portion. A molten resin is supplied and allowed to cure on the base member.

Various approaches are known to use injection molding for manufacturing a shoe.

DE 34 40 567 A1 discloses a sports shoe with an injected sole and with injected pins.

US 4,447,967 discloses a shoe, which is manufactured by injecting a plastic material onto a sock. In order to ensure a secure bonding of the plastic material and the sock, the sock comprises a base part formed of a less dense fabric, which is penetrated by mutually intersecting ribs of the plastic material.

EP 1 468 815 A1 discloses a mold for providing shoe soles and shoe sole portions, comprising a lower plate that forms, together with lateral containment portions and with an upper closure piston, at least one shoe sole impression. The lower plate and the lateral containment portions, when arranged so as to close onto the lower plate, form, along substantially mutually opposite parts of the perimeter of the at least one impression, corresponding undercut slots for supporting and locking laterally the outer edges of a preformed insole. The preformed insole is provided with channels that pass through it thickness and is obtained from a sheet of polymeric material.

GB 2 479 220 A discloses a method of making an article of footwear comprising the steps of applying a matrix material or "sock" to a die, placing the die within a mould, injecting liquid plastics polymer into the mould such that it comes into contact with the matrix material, allowing the polymer to set, and removing the resultant article of footwear. The matrix material is a breathable material such as nylon which may also have anti-bacterial properties, while the polymer is a compostable or biodegradable plastics material such as a thermoplastic polyurethane. The invention also extends to an article footwear made according to the method, which may be a dance shoe.

However, the known approaches for injecting parts of shoes have disadvantages regarding the stability of the shoe and, apart from that, technical implementations thereof are difficult. In view of this background, it is an object of the present invention to improve the provision of shoes and soles by means of injection molding.

### 3. Summary of the Invention

This object is at least in part achieved by a method for manufacturing a sole according to claim 1.

In an embodiment, a method for manufacturing a sole, in particular for a sports shoe, comprises a providing of at least one first sole element. At least one second sole element is injected (e.g. by injection molding, spraying, or any other suitable method) through the at least one first sole element.

Thus, a sole having different sole elements may be provided with a durable connection between the sole elements. By injecting at least a part of the sole through another part of the sole, a form-fitting connection between the sole elements may be provided. The material of the second sole element, after the injecting, may at least in part remain in the first sole element, such that a complete or at least a partial form-fit is provided. Thus, in particular lateral forces may be absorbed. By injecting through the first sole element, lateral forces between the first and the second sole elements may be absorbed at least in three or in all four lateral spatial directions. In some examples, a full sole layer, for example an outsole, may be injected through the at least one sole element. The sole element may also extend until (and/or into) an upper portion of a shoe.

The lifetime of a sole, after which the first and/or the second sole element disengage from the sole, may substantially be improved by means of the described embodiment. The described embodiment allows using different material for the sole elements. Due to the at least partial form-fit, the sole nevertheless has essentially the same lifetime as soles made from a single material have.

The at least one sole element may comprise a profile element. For example, the first sole element may be adapted as a profile element. By injecting the second sole element through the profile element, a secure connection between the profile element and the second sole element may be achieved, which even resists the large forces that arise at profile elements of a sole when contacting the ground. At the same time, tailored materials may be used for the profile element and the second sole element, which may, for example, form at least a part of an outsole.

The profile element may comprise at least one stud. For example, the profile element may be adapted as a stud. The large lateral forces, which studs, for example, of a soccer shoe, are exposed to during fast turns, may be safely absorbed by the at least partial form-fit between the profile element and the second sole element. The present method allows providing also soles for studded shoes or cleated shoes, such as soccer shoes, which are stable even under outdoor conditions for varying temperatures and for wet conditions. In other examples, the profile element may be provided as pin, nub, etc.

The first sole element may comprise an aperture. The aperture may be provided as a tunnel-like through hole of the first sole element. The through hole may extend from an upper side of the profile element to a lower side of the profile element. After injecting the second sole element, this aperture may at least in part be filled by the material of the sole element, such that a particularly stable connection between the profile element and the sole element is formed.

The second sole element may comprise one or more of the following synthetic materials: polyamide, polyether, block-amide, polyvinylchloride, polyurethane, thermoplastic polyurethane (TPU). These materials are particularly suited to, for example, provide an outsole with desired properties. Also further injected elements, which are described herein, may comprise one or more of these synthetic materials.

The first sole element may be provided at a flexible sock element. For example, the first sole element may be injected on the flexible sock element, or the first sole element may be clipped on the flexible sock element. Using TPU as material for sole elements, e.g. the first and / or the second sole element, for example has the advantage that it may be provided to be transparent. Thus, even after the injection of a relatively thick layer of TPU as sole element, the sock element remains visible from outside. Polyamide as sole element, up to a certain layer thickness, is also transparent or milky, respectively.

By means of injecting the second sole element through the first sole element, a connection of the second sole element with a flexible sock element may be provided. In addition, the connection between the first sole element and the flexible sock element may be improved. Thus, for example, a complete sole may be applied onto the flexible sole element. The flexible sock element may be configured as a sock, which covers the foot, and it may extend for example until the ankle or beyond the ankle. The described method thus allows providing a shoe with a stable multi-part sole, wherein the sole elements are injected onto the sock element. An additional attachment of a separately manufactured sole to a shoe is not necessary. The described method may, in addition, be fully automated: for example, the sock element may be provided in an automated manufacturing process. The at least one sole element may be provided at the sock element in a further manufacturing step, before finally the at least one second sole element is injected.

The flexible sock element may comprise a textile. For example, the flexible sock element may comprise a knitted fabric. A knitted fabric allows a cost effective automated manufacturing and may be provided with various material properties. For example, a round-knitted and / or flat-knitted and / or a tubular-knitted fabric may be used. The flexible sock element may be fabricated as a single piece or it may be composed of several elements, for example a ground portion and an upper portion, which may be e.g. stitched or glued.

The flexible sock element may comprise at least one of the following materials: Polyamide, polyester, cotton, leather, polyurethane. For example, yarns and/or fibers with and/or consisting of polyamide, polyester, polyurethane and / or cotton may be used. Leather, e.g. genuine leather and / or synthetic leather, may also be used. The sock element may essentially be fabricated from a single material. Optionally, the sock element may be printed, coated and / or be additionally functionalized and/or optically designed by other means. Alternatively or additionally, the properties of the sock element may be optimized, for example by means of combining different materials in different partial regions.

The second sole element may form an outsole element. By means of the described methods, an outsole may be fabricated in a single step, and it may be permanently connected to further sole components, for example profile elements. The connection withstands even the high loads, which occur at an outsole. The method may comprise the further step of injecting a reinforcing element for the flexible sock element. In addition to fabricating the at least one first and second sole elements, in a further manufacturing step, the flexible sock element may be reinforced as desired by means of the reinforcing element. For example, the tensile strength and/or the bending resistance of the flexible sock element may be locally increased by means of the reinforcing element. A shoe with a stable multi-part sole may thus be manufactured in a fully automated manner. For example, in an upper portion of the flexible sock element, a reinforcing element may be injected, such that the sock element is provided with predetermined properties of a shoe upper. The reinforcing element may comprise a heel cap, and / or the reinforcing element may be injected such that it forms a heel cap.

The provision of the first sole element at the flexible sock element may comprise an injecting or clipping of the first sole element on the reinforcing element. By means of the injecting of the second sole element through the first sole element, a connection of the second sole element to the reinforcing element may be provided. In addition, the connection between the first sole element and the reinforcing element may thus be improved.

The second sole element may be injected such that it is arranged at least in part between the reinforcing element and the first sole element. By means of this arrangement, a high mechanical stability of the multi-part sole and the reinforcing element may be achieved.

The reinforcing element may be injected such that it extends until (and/or onto) an upper region of the flexible sock element. Thus, the upper region of the sock element may selectively be provided with desired properties of a shoe upper. To this end, a material may be used, which is softer, more stretchable and / or more flexible as it would be desirable for a sole. The reinforcing element may comprise at least one through hole, through which the material of a first and / or a second sole element may penetrate. This may contribute to achieving an improved connection between the reinforcing element and the flexible sock element. In general, harder materials allow a better connection to the flexible sock element. The material of the reinforcing element may also be arranged at a sole portion of the flexible sock element. In other examples, the reinforcing element may be arranged at the upper region of the sock element only.

The second sole element may be harder and / or more abrasion resistant and / or stiffer than the reinforcing element. Thus, in the region of the sole, a higher hardness, abrasion resistance and / or stiffness may be provided than in an upper region.

The reinforcing element may comprise a Shore-A hardness of 25-75 in particular of 50-70, 35-55 or 40-50. Thus, the reinforcing element may for example sufficiently reinforce the upper region but at the same time enable a good wearing comfort. Moreover, material of this hardness range may still be connected in a sufficiently stable manner by means of injecting, e.g. at the flexible sock element.

The first sole element may comprise a Shore-A hardness of 55-95, in particular 60-95 or 85-95. This hardness range is also well suited e.g. for profile elements.

The second sole element may comprise a Shore-A hardness of 60-100, in particular 70-90, or 75-85. This hardness range is well suited for an outsole and it enables a secure connection to a first sole element and / or a reinforcing element.

It is generally also conceivable that expanded TPU is applied as sole element on the sock element, in particular for manufacturing a running shoe or similar types of shoes. Applying a sole element comprising or consisting of expanded TPU may be carried out in a separate step, for example after injecting a reinforcing element on the flexible sock element. Such a sole element may for example form a sole layer. A connection between the sole element comprising or consisting of expanded TPU and a reinforcing element and / or other sole elements may be achieved by means of suitable connecting techniques, for example infra-red welding, chemical connecting techniques or any other suitable connecting technique.

In an embodiment, a sole, in particular a sole for a sport shoe, is provided. The sole comprises at least one first sole element and at least one second sole element. The at least one second sole element is injected through the at least one first sole element.

The sole may be manufactured by means of any of the described methods.

According to a further embodiment, a shoe is provided with any of the soles described above.

In a further embodiment, a method for manufacturing a shoe, in particular a sports shoe, is provided. The method comprises a providing of a flexible sock element. The method further comprises an injecting of at least one sole element on the flexible sock element, such that the at least one sole element comprises a stiffening element below the arch of the foot. The stiffening element may comprise a specific geometry, e.g. it may be designed in a rib-like manner.

It has turned out that the sturdiness of a sole, which has been injected on a flexible sole element, may be improved by injecting the sole element, such that it comprises a stiffening element below the arch of the foot. By its arrangement below the arch of the foot, a sole is provided which is sufficiently resistant to bending and torsion, which may safely prevent breaking of the arch of the foot or twisting of the ankle. The stiffening element is of particular importance if a sole element comprising TPU is injected. Also when injecting a sole element made of polyamide, a stiffening element is of relevance and, in particular, enables sole elements of low thickness to be applied and at the same time a sufficiently stable sole to be provided. Sole elements having a low thickness may be desirable in order to enable sole elements, which are more transparent.

The stiffening element may be aligned along a longitudinal direction of the shoe. This design of the stiffening element in particular allows supporting the arch of the foot along its full length. Moreover, thus, a twisting of the ankle may also be prevented despite fast and powerful lateral movements, which in particular arise in sports shoes.

The stiffening element may extend from below the heel until below the metatarsals. Such an elongate stiffening element essentially ensures a sufficient stability in the entire rear region of the shoe from the heel until the metatarsals. At the same time, this allows the provision of an increased flexibility in the toe region. The stiffening element may extend along a central region of the foot below the arch of the foot.

The sole element may be injected such that it extends until (and/or onto) an upper region of the flexible sock element. By means of the sole element at least partially encompassing the flexible sock element, an improved connection between the sock element and the sole element may be achieved. Moreover, in this manner, an upper portion of the sock element may be provided with desired properties. A thickness of the sole element may be lower in the upper portion of the sock element than in a sole portion of the sock element.

The sock element may be provided with a protrusion and/or an indentation. The sole element may be injected, such that it at least partially encompasses the protrusion and/or such that it at least partially penetrates into the indentation, such that a form-fitting connection is provided. The form fitting connection is created by areas of the protrusion und/or of the indentation at least partially lying against the sole element. The stiffening element may be provided in this manner. In addition, by means of the at least partial form fit, lateral forces may be absorbed, such that a particularly stable connection between the sole element and the sock element is created. The longevity of the sole may thus be significantly increased.

The method may further comprise the step of applying the flexible sock element onto a fixation element. The fixation element may be arranged to provide the protrusion and/or the indentation of the sock element. For example, the sock element may be pulled over a fixation element, e.g. over a last, before the sole element is injected. The fixation element may, for example, comprise an elevation, which creates a protrusion at the flexible sock element placed thereon. The fixation element may also comprise a recess, which creates an indentation in the flexible sock element. For example, by means of under pressure and/or mechanical fixation means, e.g. a hook, a region of the flexible sock element may be held in the recess, such that an indentation is created in the sock element. In other examples, the sock element is pushed in to the recess of the fixation means by the injected material of the sole element. In some examples, the fixation means comprises means for ensuring the correct positioning of the sock element.

The flexible sock element may be provided such that the protrusion and/or the indentation of the sock element is at least in part pre-formed. For example, the flexible sock element may be provided in a folded manner and/or a plurality of layers to provide a protrusion and/or an indentation. Moreover, a protrusion/an indentation may be achieved by a combination of flat knitting with circular knitting. By using a fixation means having an elevation and/or an indentation it may be insured that the protrusion and/or the indentation in the flexible sock element is correctly arranged during the injection of the sole element. Moreover, the elevation and/or recess of the fixation means may further form the protrusion and/or the indentation of the flexible sock element, e.g. by stretching the material of the sock element.

The described method may also comprise the step of providing a sole plate element at the flexible sock element for forming the protrusion and/or the indentation of the sock element. The sole plate element may, for example, be inserted into the sock element or may be placed at the sock element at its outer side. The sole plate element may also be put on the fixation means, and subsequently the sock element may be pulled over the fixation means and the sole plate element. The sole plate element may comprise an elevation and/or a recess in order to provide a corresponding protrusion and/or a corresponding indentation at the sock element.

The method may further comprise the step of providing a sole plate element with an elevation and/or a recess at the sock element, wherein the sole element is injected, such that it at least in part encompasses the elevation and/or such that it at least in part penetrates into the recess, to provide a form-fitting connection. Thus, a safe connection between the sole plate element and the sole element may be ensured. Also the stiffening element may be provided in this manner. The sole plate element may, for example, be glued and/or stitched to the sock element. In another embodiment, the sole element may be injected on the flexible sock element such that also the sole plate element is fixed at the sock element.

The sole element may be configured as a reinforcing element for the flexible sock element, and the method may further comprise the step of injecting an outsole element on the reinforcing element. The reinforcing element may extend until (and/or onto) an upper portion of the sock element. In an upper region, a thickness of the reinforcing element may be reduced compared to a thickness in the sole portion. By means of a two-step injection of a reinforcing element and an outsole element, the properties for the upper portion and the sole portion may be tailored as needed independently from each other.

The sole element may also be configured as an outsole element. Moreover, a reinforcing element may be injected onto the flexible sock element prior to the injection of the outsole element. The reinforcing element may be configured such that it comprises an essentially constant thickness in the sole region. The reinforcing element may comprise at least one through hole, for example in the sole portion around an indentation and/or a protrusion of the sock element.

The outsole element may be harder and/or more abrasion resistant and/or stiffer than the reinforcing element. The properties of the outsole and/or of the upper region of the shoe may thus be tailored as needed.

The reinforcing element may comprise a shore-A hardness of 25-65, in particular 35-55 or 40-50.

The reinforcing element may comprise at least one through hole. This may contribute to achieve an improved connection between the reinforcing element, an optional outsole element and the flexible sock element.

The outsole element may comprise a Shore-A hardness of 60-100, in particular 70-90 or 75-85.

According to a further embodiment, a shoe, in particular a sports shoe, is provided, which comprises a flexible sock element. The shoe further comprises at least one sole element, which is injected on the flexible sock element, and which comprises a stiffening element below the arch of the foot.

The shoe may be manufactured by means of any of the methods described above.

The flexible sock element, the sole element and the reinforcing element, as described with reference to claims 11-15, may also comprise properties, which are described with reference to claims 1-10 for the flexible sock element, the first and second sole elements and the reinforcing element.

According to a further embodiment, an apparatus for manufacturing a shoe is provided. The apparatus comprises a fixation element for a flexible sock element, and means for injection molding arranged around the fixation element having a mold for injection molding comprising at least three parts, i.e. a mold, in which the cavity for the material for injection molding is formed by three or more parts of the mold when injection molding.

By means of a three-part design (i.e. a design having three parts), molds for injection molding may be provided in a more versatile manner, since individual parts of the three-part mold may be exchanged as needed. For example, a flexible sock element may be provided with a plurality of injected elements without a complete new mold for injection molding having to be provided for each injected element. The sock element on the fixation element may for example be fixed by two parts of the means for injection molding. For example, two parts of the means for injection molding may be arranged movably with respect to each other such that the sock element on the fixation element may be clamped within the means for injection molding by means of these two parts. The third part of the means for injection molding may thus quickly be exchanged without the need for positioning and fixing the sock element once again. For example, the third part may be designated for the sole portion of the sock element such that the sole portion of the sock element may be provided with different elements by means of exchanging only this part.

The means for injection molding may comprise a first mold part, which encompasses the fixation element at an area, which is designated for a sole of the shoe, in order to form a first mold for injection molding comprising at least three parts. Thus, by means of the first mold part, for example a sole element with a predetermined shape may be injected on the sock element. The at least two further parts of the mold for injection molding may for example only ensure that an upper region of the sock element remains free from injected material during injection of the sole element. Alternatively, they may be configured in order to shape the upper portion such that the sole element may for example extend until (and/or onto) the upper portion. The first mold part may also ensure that at least in a partial region of the sole region no material is injected. The at least two further parts may also be adapted for shaping e.g. a reinforcing element, which is not arranged in the sole portion of the sock element. The first mold part may optionally be designed to be multi-part (i.e. to comprise a plurality of parts).

The means for injection molding may comprise a second mold part, which is configured to encompass the fixation element at the area, which is designated for the sole of the shoe, instead of the first mold part, in order to form a second mold for injection molding comprising at least three parts. Thus, by means of the second mold part for example a further sole element and/or a reinforcing element may be injected. The second mold part may ensure that when injecting e.g. a reinforcing element, at least a part of the sole portion of the sock element remains free from injected material. The second mold part may, alternatively or additionally, be designed to shape the sole portion.

The means for injection molding may comprise at least two lateral mold parts which are movable relatively to each other, and which laterally encompass the fixation element. By means of the lateral mold parts the shape, e.g. of sole and/or reinforcing elements on the upper portion of the sock element may be determined. The at least two lateral mold parts may fix the sock element at the fixation element such that the position of the sock element is fixed in all three spatial directions.

The two lateral mold parts may be arranged in a movable manner relative to the first mold part and/or to the second mold part. Thus, the lateral mold parts may be joined with the first mold part and/or second mold part to form a first or second mold for injection molding, respectively, as needed, e.g. in an automated manner.

The apparatus may further comprise means for removing the fixation element from the means for injection molding. Thus, the fixation element with the sock element may be removed from the means for injection molding safely and without damaging the mold for injection molding. Also a contamination of the mold for injection molding may thus be excluded.

The fixation element for the flexible sock element may be configured to be multi-part. Thus, the fixation element may for example be adapted to sock elements corresponding to different shoe sizes. Also arranging the sock element around the fixation element may thus be facilitated.

The described apparatus may be configured such that one of the described methods may be carried out. In particular, the apparatus may be configured such that the described methods may be carried out in a fully automated manner.

According to a further embodiment, a method for manufacturing a shoe, in particular a sports shoe, comprises the step of providing a synthetic upper material and the step of providing at least one profile element. The at least one profile element is provided at the synthetic upper material such that a sole element, for example an outsole element or an outsole, can be injected between the synthetic upper material and the at least one profile element. An injecting of the sole element may then be carried out such that the sole element adheres to the synthetic upper material and the at least one profile element at the same time. Thus, the at least one profile element may be connected with the synthetic upper material by means of injecting the sole element without a separate manufacturing step being required to this end. By means of directly injecting, e.g. an outsole, between upper material, and e.g. studs, the studs are durably connected with the outsole, and the outsole is durably connected with the upper material. A further fabrication step for manufacturing the shoe is not required any more. Connection means such as adhesives, etc. are not needed any more. An advantage of a shoe manufactured by means of the described method is a particularly low weight. Moreover, automation of the manufacturing process is enabled.

The injecting may for example be carried out by means for injection molding. The injected material may for example comprise TPU. The synthetic upper material may be placed on a fixation material. A production line may comprise a plurality of such fixation elements. Moreover, means for receiving profile elements, in particular studs, may be provided. One or more profile elements, e.g. studs or islands of studs, may be inserted in the one or more means for receiving. The profile elements may be premanufactured from TPU, e.g. by a suitable injection molding method. They may comprise protrusions or indentations, which the injection molding material may encompass or in which the injection molding material may extend into, in order to achieve an additional form-fit between the injected material and the at least one profile element. The same generally applies to the upper material. Also here, protrusions and/or indentations may be provided in order to achieve an additionally stabilizing form-fit.

After insertion of the upper material into the fixation element and after insertion of the at least one profile element into the one or more means for receiving, the fixation element, together with the upper material, may be moved towards the one or more profile elements, until only a small gap remains between the upper material and the one or more profile elements. The size of the gap may be adapted to the thickness of the sole element to be injected. Subsequently, a sole element, e.g. an outsole, for example made from TPU, is injected between the upper material and the one or more profile elements.

In other examples, instead of the synthetic upper material, a different material may be used, and generally, a flexible sock element may be provided and used as explained above with reference to the flexible upper material. Moreover, this embodiment with synthetic upper material and flexible sock element, respectively, may also be combined with aspects, which were described in the context of other embodiments.

According to a further embodiment, a method for manufacturing a shoe in particular a sport shoe, comprises a providing of at least one element of the shoe. At least one second element of the shoe is injected through the at least one first element. The aspects described herein may generally also be used for fabricating elements of a shoe, which do not necessarily need to be arranged at the sole.

### 4. Brief Description of the Figures

Possible embodiments will be described with reference to the following figures in the following detailed description:
- **Fig. 1:**: Embodiment of a shoe with a sole with profile elements, through which a second sole element was injected;
- **Fig. 2:**: Schematic diagram for illustrating the injection of a second sole element through profile elements;
- **Fig. 3:**: Embodiment of a shoe with a flexible sock element and an injected sole element having a stiffening element below the arch of the foot;
- **Fig. 4A-C:**: Embodiment of a shoe with a flexible sock element and an injected sole element having a stiffening element below the arch of the foot and studs;
- **Fig. 5:**: Method for fabricating a shoe with a flexible sock element and a sole with profile element;
- **Fig. 6A-C:**: Applying a flexible sock element onto a multi-part fixation element; and
- **Fig. 7A-O:**: Method for fabricating a shoe with a flexible sock element in an apparatus having a fixation element and means for injection molding with a mold for injection molding comprising at least three parts.

### 5. Detailed Description of Possible Embodiments

Possible embodiments will be described in the following detailed description primarily with reference to soles for sport shoes and with reference to sport shoes, respectively.

Moreover, it is noted that only individual embodiments can be further explained in the following. The person skilled in the art readily recognizes that the implementation details described with reference to these specific embodiments may be modified or combined differently with each other within the scope of the appended claims, and that individual features may also be omitted as far as these seem to be optional. In order to avoid repetitions, in particular reference is made to the explanations in the above paragraphs, which also apply to the following detailed description.

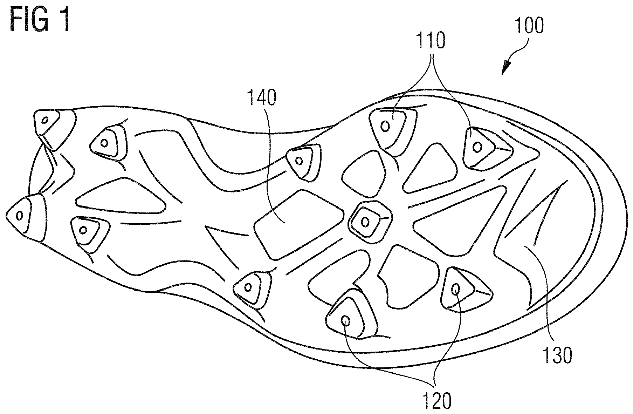

Fig. 1 shows an example for a shoe with a sole 100. The sole 100 comprises a plurality of first sole elements in form of studs 110. Each stud 110 may comprise an opening 120. The studs 110 optionally are arranged on an element 140, which may be manufactured in a single piece together with studs 110, for example injected. Element 140 may however also be fabricated separately and / or from a different material. Element 140 may for example be adapted as a reinforcing element made from TPU and / or it may form a mid-sole element. Element 140 may be adapted to be multi-part.

Through the openings 120 of profile elements 110, a second sole element in form of an outsole element 130 is injected, for example made from polyamide 12. Outsole element 130 is injected through all openings 120. In other examples, an outsole element 130 and / or other sole elements may only be injected through a subset of profile elements 110 and / or subset of openings 120. In other examples, only some of studs 110 may comprise an opening 120 and / or some of studs 110 may comprise more than one opening 120.

Outsole element 130 comprises a plurality of through holes in the forefoot region and one through hole in the heel region, through which element 140 can be seen. In other examples, other through holes may be provided. Outsole element 130 may also be adapted as a continuous outsole. Outsole element 130 may comprise a 3-dimensional structure. For example, outsole element 130 may comprise a higher thickness below the profile elements 110 than between the profile elements 110, as can be seen in the heel region in Fig. 1.

The partial arrangement of the material of outsole 130 in the openings 120 of profile elements 110 allows, as explained, a particularly stable mechanical connection between the outsole and the profile elements. In addition, the at least partial sandwich-like arrangement of the material of outsole element 130 between profile elements 110 and element 140 contributes to the stability of the sole. In some examples, sole 100 may be fabricated separately. In other examples, sole 100 may be fabricated directly on a shoe upper or a flexible sock element. It is emphasized that element 140 is only optional. Profile elements 110 may be provided at a lower side of a shoe upper or of a flexible sock element. Outsole element 130 may be injected through one or more of profile elements 130 such that sole 100 is directly provided at the lower side and such that a separate connection of sole 100 to the lower side is not necessary. In other examples instead of outsole element 130, a different sole element is injected through one or more of profile elements 110.

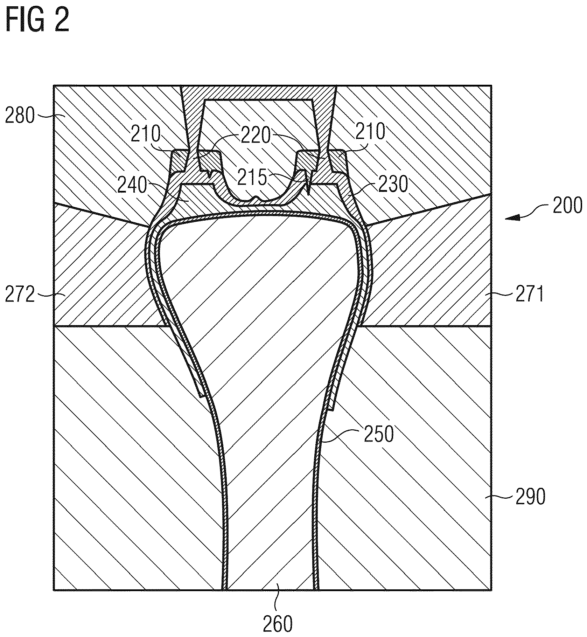

Fig. 2 shows a schematic illustration of the injection of a second sole element 230 through first sole elements, which are adapted as studs 210, for fabricating a shoe 200. A flexible sock element 250 is arranged above a fixation element 260. A reinforcing element 240 is arranged on the flexible sock element 250. The reinforcing element 240 may for example be injected on flexible sock element 250 in a first fabrication step. The reinforcing element 240 extends along the sole portion of flexible sock element 250 and until (and/or onto) the upper region thereof. The reinforcing element 240 may form a heel cap. In some examples, the reinforcing element 240 may fully extend around flexible sock element 250. By means of reinforcing element 240, for example, a desired stiffening of the upper portion may be achieved. A thickness of the reinforcing element 240 may be lower in the upper region compared to the sole region. Moreover, it may essentially be constant in the upper region. In the sole region, the reinforcing element may be thickened in regions in which first sole elements, for example studs 210 are provided. Thus, the first sole elements may already be pre-formed by means of the reinforcing element 240.

First sole elements, for example studs 210, are provided on the reinforcing element 240. Studs 210 may, for example, be injected on the reinforcing element 240 in a further fabrication step. Alternatively, studs 210 may also be clipped on reinforcing element 240. To this end, a corresponding notch may be provided in the reinforcing element 240. It is not necessary to already stably attach studs 210 at this point. For example, it is sufficient, if these are connected via a mandrel 215 or any other thin element with reinforcing element 240. The mandrel 215 may serve as a spacer between the studs 210 and reinforcing element 240. It is also possible to only arrange first sole elements, for example studs 210, at the reinforcing element 240 or - incase this optional element is not present - at the flexible sock element 250, without realizing a connection. For example, the first sole elements, for example studs 210, may only be held at or close to reinforcing element 240 and / or at flexible sock element 250.

Fixation element 260, the sock element 250 arranged thereupon with its reinforcing element 240 and studs 210 are fixed within means for injection molding having a mold for injection molding. The mold for injection molding has three parts. It comprises two lateral mold parts 271, 272, as well as a top mold part 280. Optionally, the mold for injection molding comprises a bottom part 290. The top mold part 280 is adapted such that the material for the second sole element 230 may flow to the openings 220 of studs 210 via one or more channels. The channels may be adapted such that the material streams inwards in the direction of openings 220 in a way to avoid turbulences during influx. By arranging the material of the second sole element 230 at least partially within studs 210 and between studs 210 and reinforcing element 230 and sock element 250, respectively, a stable connection may be provided, as already explained.

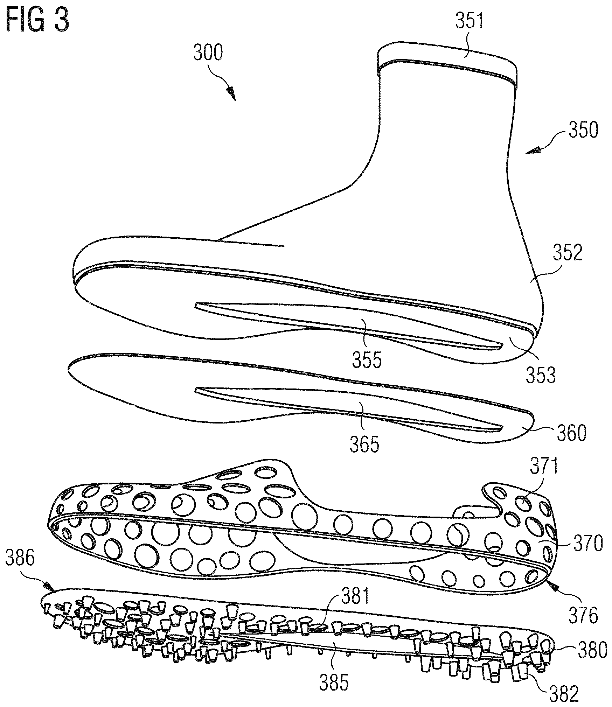

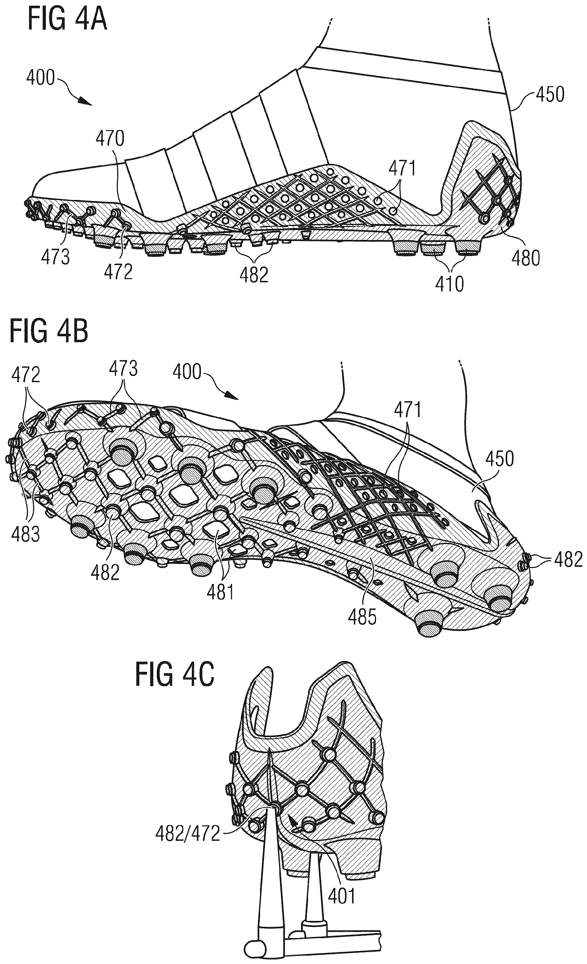

In a central region of the sole, the second sole element 230 may comprise a stiffening element, which is arranged below the arch of the foot. The stiffening element may be adapted such that it tapers in the region of the heel and in the region of the metatarsals and transitions into a flat region of the second sole element 230, there. In the cross section according to Fig. 2, such a tapered stiffening element is shown. Full views of possible stiffening elements are for example shown in Figs. 3 and 4.

The lateral mold parts to 271, 272 and top mold part 280 shape the second sole element 230. The second sole element 230 is adapted as an outsole element. The outsole element, in the cross section according to Fig. 2, extends until (and/or into) into the upper region of sock element 250. This, on the one hand, allows a further improved connection of the outsole element and reinforcing element 240 or sock element 250, respectively. On the other hand, it allows providing desired properties to a region around the sole region. For example, the outsole element may comprise a material, which has a greater hardness, a greater abrasion resistance and / or a greater stiffness than the material of reinforcing element 240. The optional bottom part 290 of the means for injection molding may determine the boundary surface of the outsole element. Alternatively or additionally, this may also be provided by means of an edge of the lateral mold parts 271, 272. In other examples, second sole element 230 may also be adapted as a different element, for example, an intermediate sole element or a midsole element.

Fig. 3 shows an example for a shoe 300 with a flexible sock element 350 adapted as a sock. The flexible sock element 350 comprises an upper portion 352 and a sole portion 353. These two portions may each be fabricated to be one-piece (e.g. monolithic). They may be stitched to each other or glued to each other. In other examples, also different and / or further portions may be provided. Flexible sock element 350 may also be fabricated to be one-piece, for example, it may be knitted. Flexible sock element 350 optionally comprises a seam 351. At the lower side of sole portion 353, a protrusion 355 may be provided. The protrusion 355 may for example be fabricated by means of circular knitting in a one-piece sole portion 353. Protrusion 355 may also be fabricated separately and connected with sock element 350 for example stitched to sock element 350. The flexible sock may for example be impregnated and / or be otherwise optically and / or functionally modified by printing, coating etc. In other examples, flexible sock element 350 may be adapted as an incomplete sock and cover only a part of the surface of the foot.

Shoe 300 optionally comprises a sole plate 360, which may for example be formed from polyamide or TPU. The sole plate may for example be fabricated by a suitable injection molding method or by means of a 3-D printing method.

In a first example, sole plate 360 is adapted to be arranged at the lower side of sole portion 353. For example, it may be glued and / or stitched, there. Sole plate 360 comprises an elevation 365, which is adapted such that protrusion 355 of flexible sock element 350 can be arranged therein. Sole plate 360 may, in other examples, be provided as sole plate element, which only covers a partial region of the lower side of sole portion 353, for example a forefoot region, such that if needed, a pressure of the studs may be distributed in a better way to the forefoot.

According to a second example, sole plate 360 is releasably attached at a sole portion of a fixation element, as described above, e.g. a last. For example, soluble adhesives or pins may be used for attaching. For connecting with sole portion 353 of sock element 350, sole plate 360 may comprise a hot-melt coating at its outer side facing away from the fixation element. After releasably attaching sole plate 360 on the fixation element, sock element 350 is pulled over the fixation element and sole plate 360. Therein, sole plate 360 is arranged inside sole portion 353 of sock element 350. When subsequently injecting one or more sole elements onto sock element 350, sole plate 360 may be permanently connected with sock element 350 via the hot-melt coating. If needed, a (removable) insole may be arranged above the sole plate 360 inside sock element 350.

In a third example of sole plate 360, it is exchangeably inserted into sock element 350. The insertion of sole plate 360 is carried out after injecting sole elements on an outer side of the sock element. The sole plate may comprise an additional layer of damping material in this regard.

Shoe 300 may comprise a reinforcing element 370. The reinforcing element 370 may be injected onto sock element 350 and optionally onto sole plate 360. By means of the reinforcing element 370, the upper portion 352 of the flexible sock element may be provided with desired mechanical properties. For example, in a lower region of the upper portion of the flexible sock (or around it), an increased stiffness and tensile strength may be provided. In particular, this region may extend further upwards along the upper portion in the heel region and in the instep region compared to a midfoot region since an increased sturdiness may be desirable in the former regions. By means of reinforcing element 370, it may be ensured that shoe 300 provides sufficient traction and that a slipping of the foot within the shoe is excluded. For example, reinforcing element 370 may be arranged across the entire instep region of flexible sock element 350. In other examples, it is only arranged in a region of the forefoot adjacent to the sole. By using through holes 371 of reinforcing element 370, the local material density may selectively be controlled. Thus, varying degrees of stiffness and tensile strength may be achieved. Moreover, reinforcing element 370 may also provide an increased friction when contacting a ball, e.g. a soccer ball. If reinforcing element 370 also extends onto sole plate 360, the latter may be fixed to shoe 300 by means of reinforcing element 370, without a gluing and/or stitching of sole plate 360 being necessary. Reinforcing element 370 may, independently of the optional sole plate 360, also extend onto sole portion 353 of flexible sole element 350.

Shoe 300 finally comprises a sole element 380. Sole element 380 may be adapted as an outsole element. Sole element 380 may be injected onto sole portion 353 of flexible sock 350, onto an optional sole plate element 360 arranged thereupon, and optionally onto reinforcing element 370. For example, sole element 380 may overlap reinforcing element 370 in a region 386 of sole element or in a region 376 of reinforcing element 370, respectively, which are arranged along the edge of sole portion 353. In other examples, different overlapping regions may be provided. Sole element 380 comprises a stiffening element 385. Stiffening element 385 may ensure a sufficient stability of the sole of shoe 300. Sole element 380 may be injected such that it at least partially encompasses protrusion 355 and/or optional elevation 365. Thus, on the one hand, stiffening element 385 may be provided. On top of that, additionally a form-fitting connection between sole element 380 and flexible sock element 350 and/or optional sole plate element 360 may thus be provided.

Sole element 380 may comprise through holes 381. In other examples, sole element 380 may be arranged continuously and/or fully cover sole portion 353. Sole element 380 optionally comprises profile elements 382, which may be adapted as nubs. In other examples, also studs may be provided. Sole element 380 may overlap reinforcing element 370.

Figures 4A-B show a further example for a shoe 400 with a flexible sock element 450. Fig. 4A shows a medial view of shoe 400. Flexible sock element 450 may be adapted as a sock with a seam around an ankle region. Sock element 450 may be optically designed or functionalized, as desired.

An injected reinforcing element 470 may be placed at the sock element 450. Reinforcing element 470 may at least partially be arranged at a sole portion of sock element 450. It may fully extend around a sole portion of sock element 450. Alternatively, reinforcing element 470 may only be arranged at a region along an edge of the sole portion. Reinforcing element 470 may moreover extend onto an upper portion of sock element 450. Reinforcing element 470 may comprise a heel region. Reinforcing element 470 may optionally comprise a plurality of through holes 471 and/or nubs 472 and/or grooves 473.

Moreover, an injected sole element 480 may be placed at sock element 450. Sole element 480 may be injected after injection of reinforcing element 470 and it may overlap with reinforcing element 470. Sole element 480 may be arranged in a sole portion of sock element 450. Sole element 480 may, in addition, extend until (and/into into) the upper portion of the sock element and it may comprise a heel region. The heel region of sole element 480 may, fully or partially, overlap the heel region of reinforcing element 470. Moreover, sole element 480 may fully or partially overlap reinforcing element 470 in a region of the sole portion of sock element 450, e.g. in a region along the edge of the sole portion. Sole element 480 may comprise profile elements, e.g. nubs 482 and/or studs, etc.

Shoe 400 may moreover comprise studs 410. They may be injected onto the shoe. For example, they may be injected onto sole element 480. Optionally, they may also be injected onto reinforcing element 470 and/or sock element 450. Sole element 480 may be injected through profile elements 410. Alternatively, it is also possible, to insert the studs 410 into a mold and to inject the sole element 480 and/or the reinforcing element 470 between the studs 410 and the sock element 450.

Figure 4B shows a medial bottom view of shoe 400. As shown in Fig. 4B, the shoe 400 optionally also comprises through holes 481, nubs 482 and grooves 483 of the sole element 480 in addition to the through holes 471, nubs 472 and grooves 473 of the reinforcing element 470. Moreover, the sole element 480 comprises a stiffening element 485, which is arranged below the arch of the foot. Stiffening element 485 extends from below a rear region of the heel until below the metatarsals. The stiffening element 485 is aligned along a longitudinal direction of the shoe 400. The through holes 481 and 471 of the sole element 480 and/or of the reinforcing element 470, respectively, may influence the venting properties of shoe 400. In particular, they may be adjusted to each other, such that a waterproof shoe 400 is provided. In some examples, sole element 480 and/or reinforcing element 470 are provided without through holes 481 and 471, respectively. Optionally, also shoe 400 may comprise at least one sole plate element, which is provided within the flexible sock element 450 and/or outside at the lower side of the sole portion of the flexible sock element 450.

Optionally, local injection ports 401 are provided in the mold for injection molding, by means of which the sole element 480 and/or the reinforcing element 470 are injected. These may be provided at the positions of nubs 482 and 472, respectively, as shown in Fig. 4C. Thus, the injection occurs into larger cavities, such that turbulences in the injection stream may be reduced and a more even injection as well as improved injection quality are enabled.

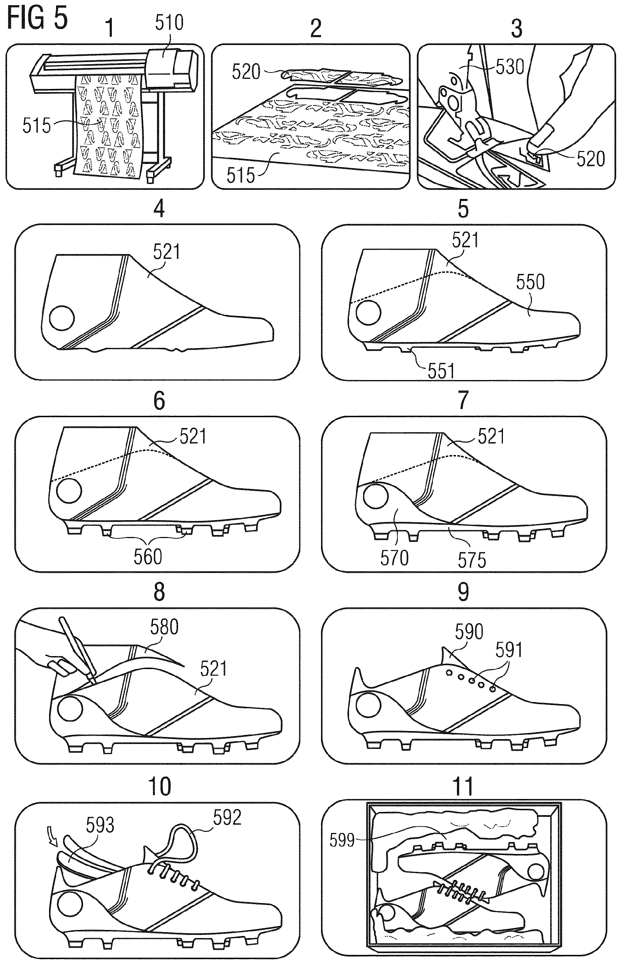

Fig. 5 shows a method for fabricating a shoe with a flexible sock element and a sole with profile elements, which comprises steps 1-11. The person skilled in the art readily recognizes that the individual steps are only exemplary and individual steps may also be omitted and/or these may be carried out in different orders. Step 1 shows a printing onto a flexible starting material 515 by means of a printer 510. Thus, the starting material 515 may be optically designed and/or functionalized. The starting material may, alternatively or additionally, also be coated, flock coated, etc. The starting material may be a sheet material.

Step 2 shows a cutting of portion 520 for a flexible sock element 521 from the processed starting material 515. When using a sheet material as starting material 515, a multitude of portions 520 may be cut out in a continuous manufacturing process. The cutting out may for example be carried out by laser cutting. Alternatively, the sock elements 520 may also be die cut.

Step 3 shows a closing of the portion 520. The closing may be carried out automatically by means of a robot arm 530 or it may be carried out semi-automatically. By closing the portion 520, which may be fabricated to be flat, a flexible sock element 521 is provided, which encompasses the foot. The sock element 521, which is shown in step 4, is applied onto a fixation element, e.g. it is pulled over a last.

In a first injection molding step, a reinforcing element 550 is injected onto the sock element 521 as shown in step 5. The reinforcing element 550 covers the sole portion of the sock element 521 and extends until (and/or onto) the upper portion of the sock element 521. It may be arranged continuously, i.e. without through holes. The reinforcing element 550 may fully cover the upper portion of sock element 521, which forms the upper of the final shoe (cf. step 8). The reinforcing element 550 may comprise thickenings 551 at the sole portion of the sock element 521. The thickenings 551 may be arranged in regions, in which profile elements are to be placed at the shoe, as already explained with reference to Fig. 2.

In step 6, studs 560 are injected onto thickenings 551. In further examples, different and/or further profile elements may be provided. In particular, profile elements may also be injected without thickenings 551. In other examples, the profile elements may be clipped on, or they may only be placed at the reinforcing element 550.

In step 7, a sole element 570 is injected onto the reinforcing element 550. The sole element 570 may be injected through one or more of profile elements 560, as for example explained with reference to Fig. 2. The sole element 570 may comprise a stiffening element 575 below the arch of the foot. The stiffening element 575 can for example be provided by means of an injection in or around a recess and/or an elevation, respectively, on the reinforcing element 551, which may be provided as already explained. The sole element 570 may also extend until (and/or into) the upper portion of sock element 521. For example, it may be arranged in the heel region, in order to further strengthen the shoe. Optionally, the sole element 570 may extend around the foot around a lower region of the upper portion. The sole element 570 may be arranged as an outsole element or a complete outsole. Alternatively, an outsole element or an outsole may be attached to sole element 570, for example pressed or glued.

The steps 8 and 9 relate to the provision of a laced fastening on the shoe. To this end, and step 8, a part 580 of the upper portion of the flexible sock element 521, around which the laced fastening is to be provided, is cut out.

This may again be carried out by means of laser cutting or die cutting, etc. In step 9, holes 591 for the laces are created in the flexible sock element 521, for example by die cutting. Moreover, a tongue 590 may be attached to the sock element 521, e.g. stitched.

In step 10, a (removable) insole 593 is inserted into the shoe. The insole 593 may for example comprise a lining. Moreover, it may comprise a sole portion in order to provide a further improved foot bed. Moreover, optionally, lacings may be inserted into the holes 591.

In step 11, a right and a left shoe is packed by means of a casing 599.

The steps 1-11 may be carried out in a fully automated manner. For example, they may be part of an on demand fabrication process, in which a pair of shoes or a shoe is fabricated subsequent to an order and/or in a customized manner. The fabrication process may be carried out in an automated manner in a factory, and the shoes may subsequently be shipped. The fabrication process may, however, also be carried out in a sporting goods store and/or in a shoe store. Due to the automated fabrication, a fast and individual manufacturing directly following the demand of a customer is enabled. By means of one or more of the steps 1-11, as described above, for example a business model regarding on demand order/fabrication may be established.

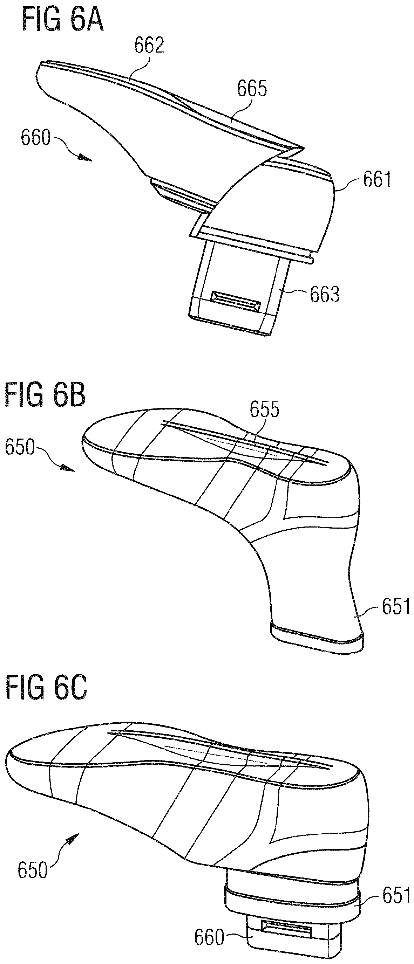

Figures 6A-C show the application of a flexible sock element 650 on a multi-part fixation element 660. Figure 6A shows a two-part fixation element 606D, which comprises a last. The fixation element comprises a heel portion 661 and a toe and instep portion 662, respectively, which form the last. These two portions may be fitted into each other and out of each other, respectively. Instep portions 662 having different sizes may be provided, in order to adapt the size of the last to the size of the respective sock element, which has to be processed. The instep portion 662 and optionally the heel portion 661 may jointly comprise a bulge 665 at the side, which is designated for the sole portion of the sock element. The bulge 665 may be designated to provide a protrusion on the sock element 650 or to be arranged in a protrusion of the sock element 650. Alternatively or additionally, the sock element 650 or the fixation element 660 may comprise an indentation or recess, respectively. The heel portion may comprise an attachment portion 663, which may be arranged to be elongate. By means of the attachment portion 663, the fixation element may be inserted into means for injection molding manually or in an automated manner.

Figure 6B shows a flexible sock element 650, which may essentially be provided for example as explained with reference to Fig. 3. The flexible sock element 650 may in particular comprise a protrusion 655. Prior to applying the flexible sock element 650 to the fixation element, an optionally provided portion 651 of the flexible sock element 650, which extends beyond the region of the ankle of the foot, may be folded.

Figure 6C shows the flexible sock element 650 with folded portion 651 as it may be placed on the fixation element 660. The provision of the fixation element 660 as a multi-part element may facilitate the placement of the flexible sock element 650 on the fixation element 660. Prior to placing the flexible sock element 650, optionally, a sole plate element may be placed within flexible sock element 650. Prior to or after the placing, alternatively or additionally, a sole plate element may be placed on an outer side of the flexible sock element 650. By means of one or more sole plate elements and/or the fixation element a protrusion and/or an indentation may be provided and/or supported at the flexible sock element 650, as already explained.

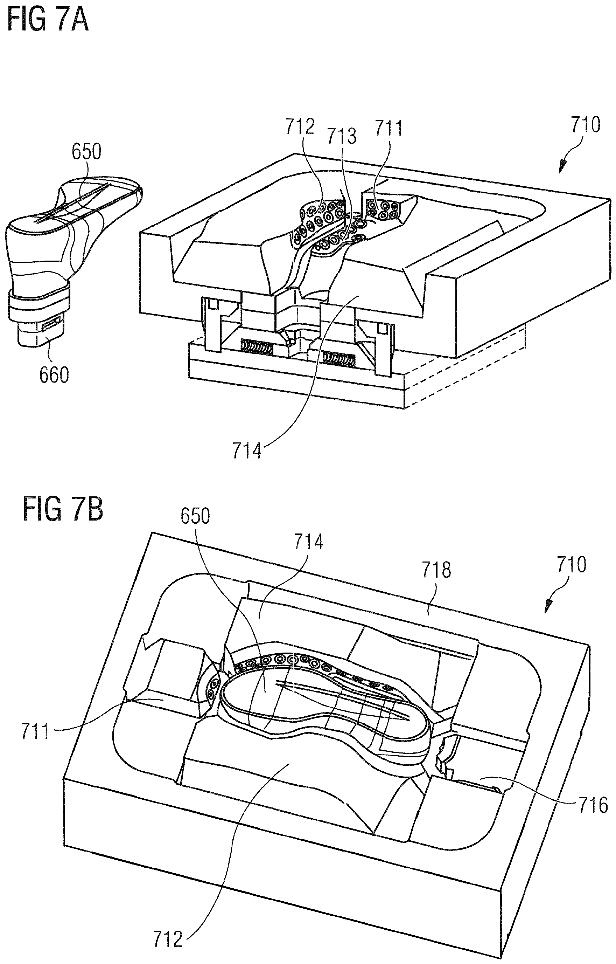

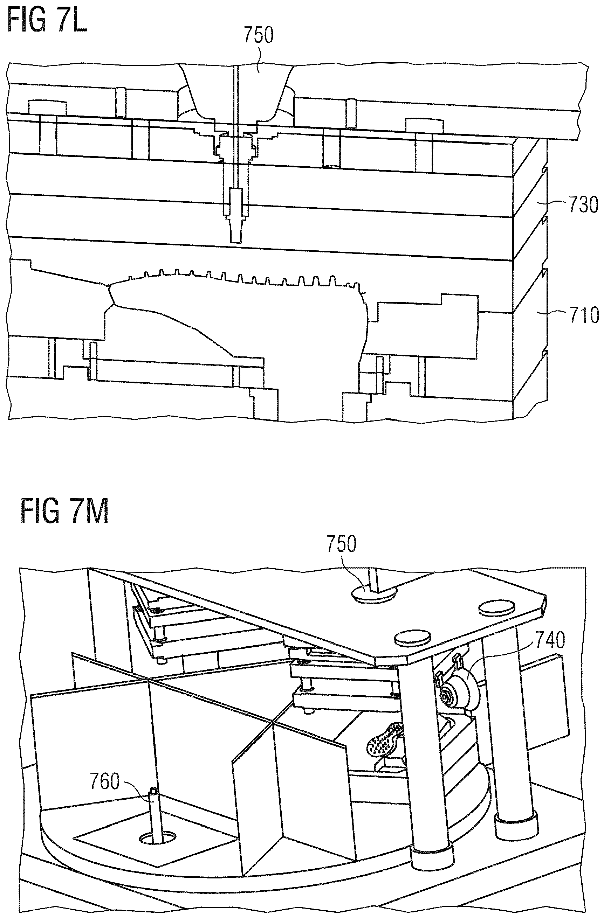

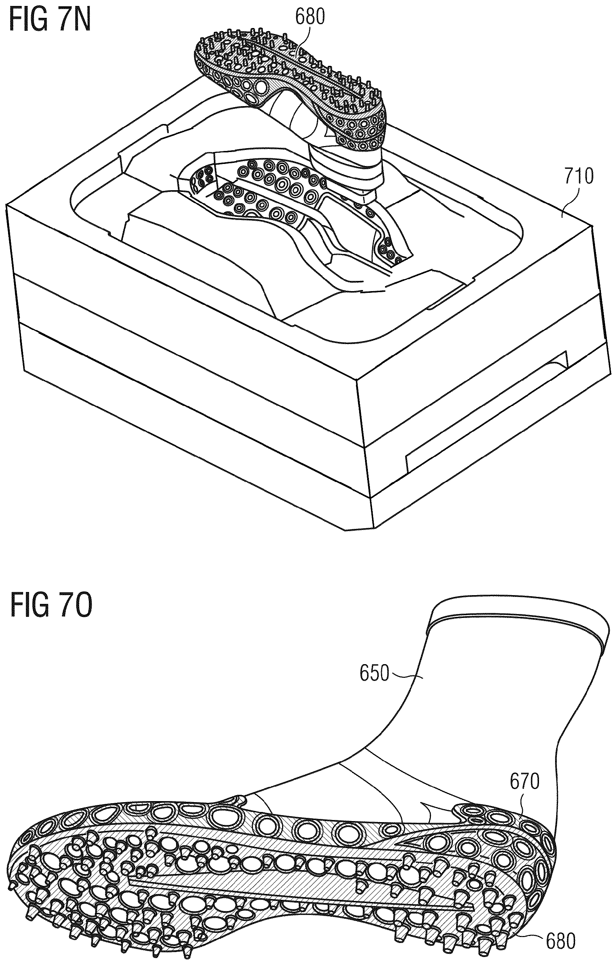

Figures 7A-N show a method for fabricating a shoe with a flexible sock element in an apparatus having a fixation element and means for injection molding with a mold for injection molding comprising at least three parts.

In Fig. 7A, an exemplary sock element 650 (cf. Fig. 6A-C) placed on the exemplary fixation element 660 is inserted into a first lateral mold for injection molding 710, which is illustrated in a cross sectional view. The lateral mold for injection molding 710 comprises several lateral mold parts. It comprises a lateral front mold part 711 and a lateral rear mold part 716 (not shown in Fig. 7A; cf. for example Fig. 7B). Moreover, it comprises top and bottom lateral mold parts 712 and 713, respectively, which are shown on the left side of Fig. 7A. Moreover, it comprises a top lateral mold part 714, which is shown on the right side of Fig. 7A. The lateral mold for injection molding 710 may comprise a further lateral bottom mold part, which may be arranged below the mold part 714, but which is not shown in Fig. 7A. In other examples, also more or less or differently arranged lateral mold parts may be provided. The lateral mold for injection molding 710 optionally comprises a frame, below which the lateral mold parts are arranged. The lateral mold parts 711, 712, 714 and 716 are each adapted to be laterally movable with respect to each other. Optionally, some of these lateral mold parts may be combined with other lateral mold parts, such that a lateral mold for injection molding may be provided in a modular manner from a plurality of different lateral mold parts. One or more mold parts may then be used for different lateral molds for injection molding.

Fig. 7B shows a top view of the lateral mold for injection molding 710 with its mold parts 711, 712, 714, 716 and frame 718.

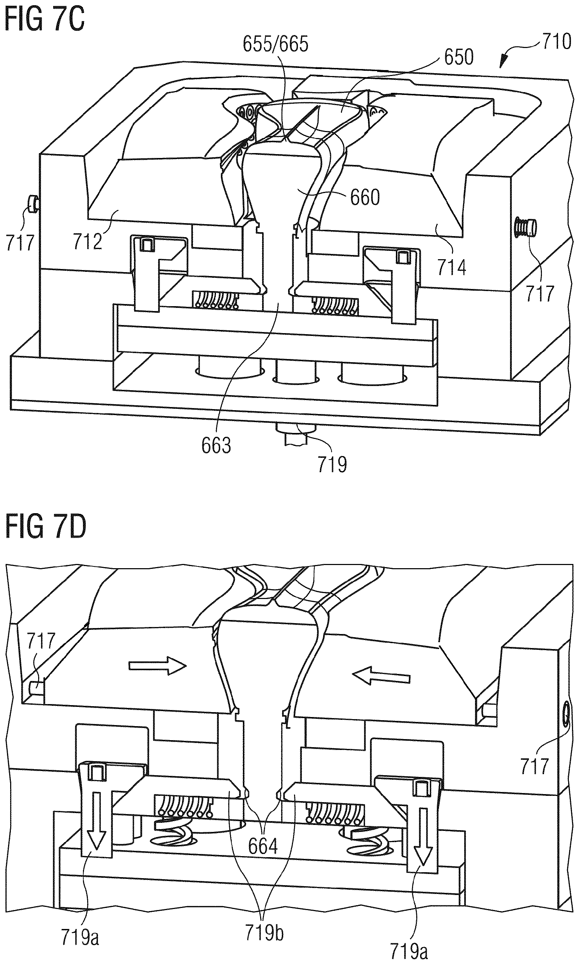

Fig. 7C shows a cross section of the lateral mold for injection molding 710 with inserted fixation element 660 and sock element 650. The fixation element may for example comprise a bulge 665 which arranges itself in a protrusion 655 of the sock element or which provides the protrusion 655 of the sock element, respectively. After correctly positioning and/or fixing the fixation elements 660, e.g. by means of its optional attachment portion 663, in the lateral mold for injection molding 710, the lateral mold for injection molding 710 is closed. To this end, the lateral mold for injection molding 710 comprises a lateral means for closing 717. The lateral means for closing 717 may for example comprise one or more bolts and/or one or more pistons and means for restoring, e.g. one or more springs.

By means of the lateral means for closing 717, the lateral top mold parts 712 and 714 are moved towards each other. For example, both are moved symmetrically toward each other. The lateral bottom mold parts 713 may be closed jointly with the lateral top mold parts 712 and 714 or separately with their own means for closing. The front and rear lateral mold parts 711 and 716, respectively, may optionally also be closed by their corresponding own means for closing. In Fig. 7C, the means for closing 717 is shown in an open state.

In Fig. 7D, the means for closing 717 is shown in a closed state. Moreover, as also shown in Fig. 7D, the fixation elements 660 may be moved (in Fig. 7D downwards) such that the sole portion of the sock element 650 moves in a direction of a center of the cavity, which is formed by the lateral mold parts 711-716. This movement of the fixation element 660 may occur simultaneously with the movement of the lateral mold parts 711-716 or subsequently. To this end a vertical means for closing 719 is provided which comprises one or more pistons or bolts and a means for restoring, as the lateral means for closing 717. According to the example shown in Fig. 7D, the lateral mold for injection molding 710 may comprise a lever mechanism, which transforms the vertical movement of the means for closing 719 into a vertical movement of the attachment portion 663. The two levers 719a, during their downward movement, press onto the sliders 719b, such that the sliders 719b are pushed into the notches 664 of the attachment portion 663. The sliders 719b and the notches 664 are adapted such that the attachment portion 663 moves downwards by a predetermined amount, if the sliders 719b are fully pressed into the notches 664.

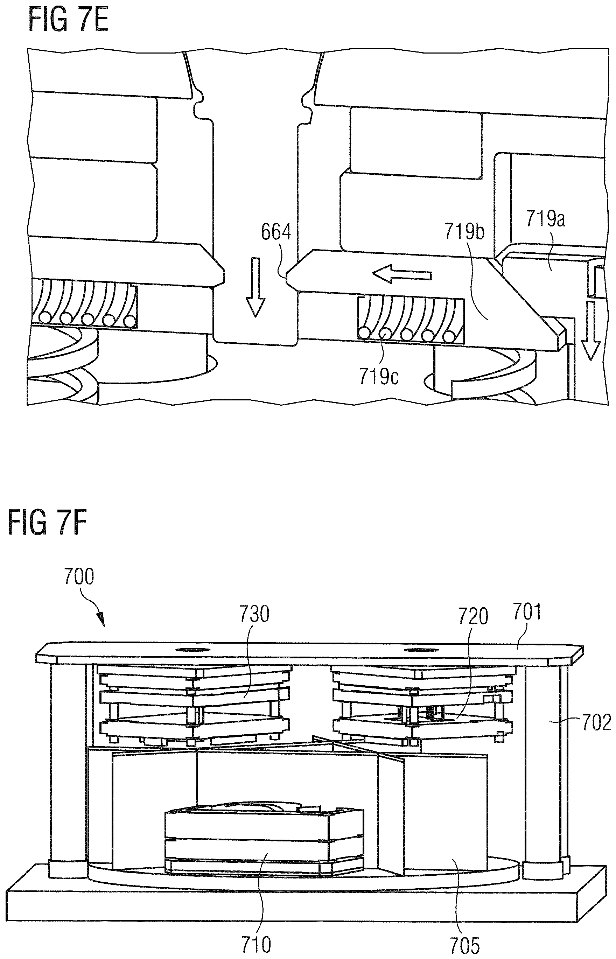

This position is shown in Fig. 7E. Thus, a fine positioning of the fixation element 660 within the lateral mold for injection molding 710 is enabled. The sliders 719b may comprise a means for restoring, e.g. they may each comprise a spring 719c.

Fig. 7F shows the lateral mold for injection molding 710 within the means for injection molding 700. The means for injection molding 700 comprises a movable, e.g. rotatable, rack, and the lateral mold for injection molding 710 is arranged within their rack. A plurality of lateral molds for injection molding 710 may be arranged within the rack, wherein they may be separated by walls 705. Above the rack, one or more top mold parts 720 and 730 may be placed on a carrier 701. The top mold parts 720 and 730 may be placed in a hanging manner. The lateral mold for injection molding 710 may be moved such that it is placed below a desired top mold part 720 or 720. The carrier 701 may be moved downwards onto the lateral mold for injection molding 710 along one or more columns 702 such that by means of closing the lateral mold for injection molding 710 and a top mold part 720 or 730 a first mold for injection molding is provided.

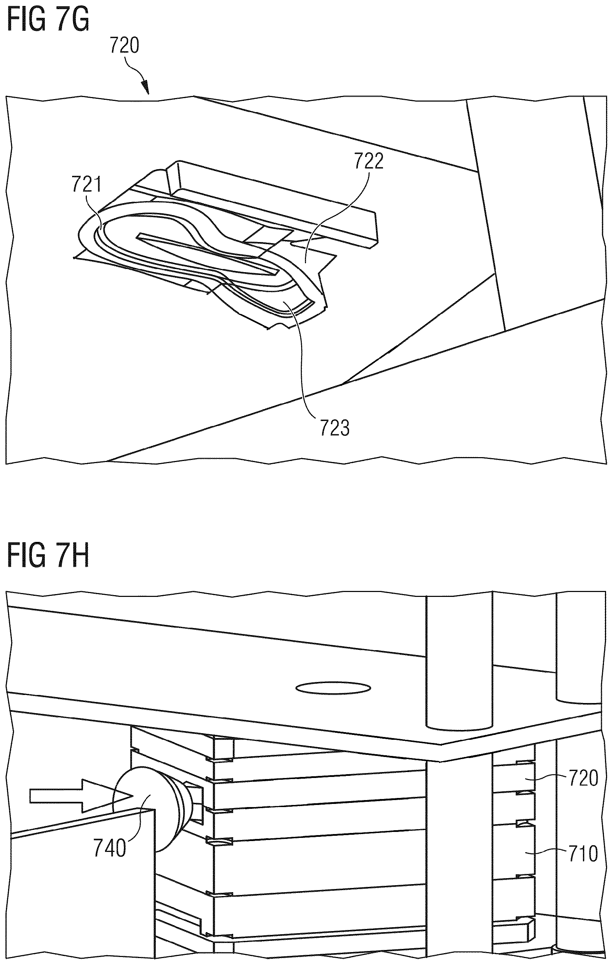

Fig. 7G shows a bottom view of the first top mold parts 720. Also the first top mold parts 720 may be adapted to be multi-part. For example, it may comprise a left heel part 722 and a right heel part 723 and a main part 721. The heel parts 722 and 723 may be arranged to be laterally movable relative to the main part 721. In other examples, additional and/or other parts of the first top mold part 720 may be provided. The first top mold part 720 may be constructed in a modular manner from a plurality of parts, as explained with reference to the lateral mold for injection molding 710. The first top mold part 720 may alternatively also be provided to be one-piece.

Fig. 7H shows the lateral mold for injection molding 710 and the first top mold part 720, which - in a closed state - jointly form a first mold for injection molding. Via a lateral injection head 740 of the means for injections molding 700, a material may be injected into the first mold for injection molding and onto the sock element 650 arranged therein. The injection head 740 may be placed in a corresponding opening of the top mold part. In other examples, the injection into the first mold for injection molding may for example also occur from the top. Moreover, a plurality of injection heads may simultaneously be provided also. Optionally, further elements, e.g. a sole plate element - as e.g. described with reference to Fig. 6 - may be arranged at the sock element, before commencing the injection.

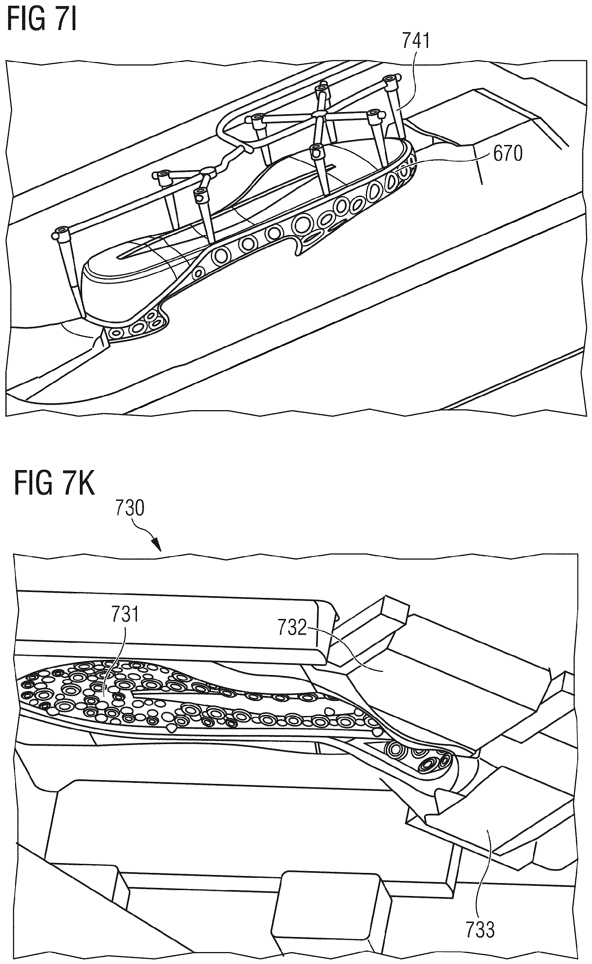

The injection process is schematically shown in Fig. 7I. The first mold for injection molding comprises one or more channels 741 through which the material for an element 670 is injected onto the sock element 650. The material of the element 670 may locally be injected at different positions. The material distributes itself within the cavity formed by the mold for injection molding during the injection. Optionally, the distribution may be supported, e.g. by evacuating the cavity. The element 670 may be arranged as a reinforcing element, e.g. as the reinforcing element 370. The element 670 may, however, also be adapted as a sole element. The geometry of element 670 is defined by the first mold for injection molding, which is formed by the lateral mold for injection molding 710 and the first top mold part 720. In the present example according to Fig. 7I, the top mold part essentially serves for the purpose of sealing the sock element 650 in a region, which comprises the sole portion and a part of the heel portion of the sock element. The material of the element 670 is injected into the cavity defined by the lateral mold for injection molding. In other examples, the element 670 may also extend across other regions of the sock element 650, e.g. its entire heel region and/or its sole portion and/or around its protrusion 655. The properties of the element 670 are at least in part determined by the respective material, which is used for injection.

Fig. 7K shows a bottom view of a second top mold part 730. It may generally be configured similarly as the first top mold part 720 and it may differ from the first top mold part 720 only by the design of its shaping portion of mold part 730.

In an example, the first top mold part 720 may be removed from the lateral mold for injection molding 720 after injecting the element 670. The lateral mold for injection molding 710 may then be moved such that it is placed below the second top mold part 730. Finally, the second top mold part 730 may be moved towards the lateral mold for injection molding 710, such that the second top mold part 730 and the lateral mold for injection molding 710 form a second mold for injection molding. By means of the second mold for injection molding, a further element 680 (cf. Fig. 7O) may be injected onto the sock element 650. The shape of the injected further element 680 is defined by the second mold for injection molding. The further element 680 may be adapted as an outsole element, e.g. as outsole element 380. The material for the further element 680 may e.g. be injected into the second mole for injection molding by means of an injection head 750 from the top. Alternatively, the material may also be injected laterally, as explained with reference to Fig. 7H. Above the first as well as above the second top mold part 720 and 730, respectively, an injection head 750 for injecting from the top may be provided. Moreover, an injection head 740 for injecting from the side may each be provided. Alternatively, it is also possible that only one injection head for lateral injection and/or for injection from the top is provided at one or more top mold parts. Optionally, an injection head 740, 750 is adapted to be movable and/or rotatable.

Fig. 7M shows the means for injection molding 700 with a means 760 for removing the fixation element 660 from the means for injection molding 700. The means 760 may be arranged as a bolt or piston, in order to push the fixation element out of the lateral mold for injection molding 710 in a vertical direction towards the top, as shown in Fig. 7M.

Fig. 7O shows a view of the sock element 650 with an injected first element 670 and an injected second element 680. By means of the described method and/or the described apparatus, e.g. a shoe 300, as explained with reference to Fig. 3, may be fabricated. By means of correspondingly adapted first and second mold for injection molding and optionally further molds for injection molding, sole elements with stiffening element, first and second sole elements, profile elements, reinforcing elements, outsole elements, mid sole elements and/or other elements, etc., as described with reference to Fig. 1-5, may be injected onto flexible sock elements with or without a sole plate element.

## Claims

1. A method for manufacturing a sole, in particular for a sports shoe, wherein the method comprises:
a. providing at least one first sole element (110; 210) for the sole, wherein the first sole element (110) is provided at a flexible sock element (250);
b. injecting at least one second sole element (130; 230) through the first sole element (110; 210).

2. The method according to claim 1, wherein the first sole element (110; 210) comprises a profile element.

3. The method according to claim 1 or claim 2, wherein the first sole element (110; 210) comprises an aperture (120; 220).

4. The method according to any of claims 1-3 wherein the second sole element (130; 230) comprises one or more of the following synthetic materials: polyamide, polyether-block-amide, polyvinylchloride, polyurethane, and polyvinylchloride.

5. The method according to claim 1, wherein the flexible sock element (250) comprises a textile, in particular a knitted fabric.

6. The method according to any of claims 1-5, wherein the second sole element (130) forms an outsole element.

7. The method according to any of claims 1-6, further comprising the step of injecting a reinforcing element (140; 240) for the flexible sock element (250), wherein the providing the first sole element (110) at the flexible sock element (250) comprises a injecting or clipping of the first sole element (110; 210) on the reinforcing element (140; 240).

## Patentansprüche

1. Verfahren zum Herstellen einer Sohle, insbesondere für einen Sportschuh, wobei das Verfahren umfasst:
a. Bereitstellen mindestens eines ersten Sohlenelements (110; 210) für die Sohle, wobei das erste Sohlenelement (110) an einem flexiblen Sockenelement (250) bereitgestellt wird;
b. Spritzen von mindestens einem zweiten Sohlenelement (130; 230) durch das erste Sohlenelement (110; 210) hindurch.

2. Verfahren nach Anspruch 1, wobei das erste Sohlenelement (110; 210) ein Profilelement umfasst.

3. Verfahren nach Anspruch 1 oder Anspruch 2, wobei das erste Sohlenelement (110; 210) eine Öffnung (120; 220) umfasst.

4. Verfahren nach einem der Ansprüche 1-3, wobei das zweite Sohlenelement (130; 230) eines oder mehrere der folgenden synthetischen Materialien umfasst: Polyamid, Polyether Block-Amid, Polyvinylchlorid, Polyurethan und Polyvinylchlorid.

5. Verfahren nach Anspruch 1, wobei das flexible Sockenelement (250) ein Textil, insbesondere ein Gestrick umfasst.

6. Verfahren nach einem der Ansprüche 1-5, wobei das zweite Sohlenelement (130) ein Außensohlenelement bildet.

7. Verfahren nach einem der Ansprüche 1-6, das ferner den Schritt Aufspritzen eines Verstärkungselements (140; 240) für das flexible Sockenelement (250) umfasst, wobei das Bereitstellen des ersten Sohlenelements (110) an dem flexiblen Sockenelement (250) ein Aufspritzen oder Aufstecken des ersten Sohlenelements (110; 210) auf das Verstärkungselement (140; 240) umfasst.

## Revendications

1. Un procédé de fabrication d'une semelle, en particulier pour une chaussure de sport, dans lequel le procédé comprend :
a. l'obtention d'au moins un premier élément de semelle (110 ; 210) pour la semelle, le premier élément de semelle (110) étant disposé à l'endroit d'un élément chaussant flexible (250) ;
b. l'injection d'au moins un second élément de semelle (130 ; 230) au travers du premier élément de semelle (110 ; 210).

2. Le procédé selon la revendication 1, dans lequel le premier élément de semelle (110 ; 210) comprend un élément de profil.

3. Le procédé selon la revendication 1 ou la revendication 2, dans lequel le premier élément de semelle (110 ; 210) comprend une ouverture (120 ; 220).

4. Le procédé selon l'une des revendications 1 à 3, dans lequel le second élément de semelle (130 ; 230) comprend un ou plusieurs des matériaux synthétiques suivants : polyamide, polyéther-bloc-amide, poly(chlorure de vinyle), polyuréthanne, et poly(chlorure de vinyle).

5. Le procédé selon la revendication 1, dans lequel l'élément chaussant flexible (250) comprend un textile, en particulier un textile tricoté.

6. Le procédé selon l'une des revendications 1 à 5, dans lequel le second élément de semelle (130) forme un élément de semelle extérieur.

7. Le procédé selon l'une des revendications 1 à 6, comprenant en outre l'étape d'injection d'un élément de renfort (140 ; 240) pour l'élément chaussant flexible (250), l'obtention du premier élément de semelle (110) à l'endroit de l'élément chaussant flexible (250) comprenant une injection ou un emboitage du premier élément de semelle (110 ; 210) sur l'élément de renfort (140 ; 240).
